# EUROPEAN PATENT SPECIFICATION

(11) **EP 3 831 897 B1**
(45) Date of publication and mention of the grant of the patent: **25.10.2023**
(21) Application number: 19214056.4
(22) Date of filing: 06.12.2019
(51) Int. Cl.: C09D 11/033, C09D 11/36, C09D 7/20

(54) **PRINTING INK OR VARNISH COMPOSITION CONTAINING OXYALKYLENE DIALKYLETHER**
DRUCKTINTEN- ODER LACKZUSAMMENSETZUNG MIT OXYALKYLENDIALKYLETHER
ENCRE D'IMPRESSION OU COMPOSITION DE VERNIS CONTENANT UN DIALKYLÉTHER OXYALKYLÈNE

(43) Date of publication of application: 09.06.2021
(73) Proprietor: hubergroup Deutschland GmbH, 85551 Kirchheim (DE)
(72) Inventor: CULLMANN, Michael, 85221 Dachau (DE); CUNY, Silke, 82054 Sauerlach (DE); WILL, Ulrike, 81479 München (DE); KLAUSNITZER, Sylvia, 83052 Bruckmühl (DE)
(74) Representative: Henkel & Partner mbB

(56) References cited:
- EP-A1- 3 112 428
- US-A- 5 993 911
- ANNA ZHENOVA ET AL: "Solvent Applications of Short-Chain Oxymethylene Dimethyl Ether Oligomers", ACS SUSTAINABLE CHEMISTRY & ENGINEERING, vol. 7, no. 17, 3 September 2019 (2019-09-03), pages 14834-14840, XP055693101, US ISSN: 2168-0485, DOI: 10.1021/acssuschemeng.9b02895

## Description

The present invention relates to a printing ink composition or varnish composition, which is suitable to be used for any kind of printing technique, such as for offset printing.

Printing inks usually contain pigment, binder, solvent and several additives. While the pigment is responsible for the color of the dried printing ink, the solvent has the function to keep the binder and pigment liquid before the printing ink is allowed to dry. During the drying of the printing ink, the solvent evaporates or permeates into the substrate and the binder connects on account of its crosslinking and/or gluing properties the pigment of the printing ink with the printed substrate. In other words, the purpose of the binder is to completely encase the pigments and to fix the pigments on the printed substrate. Printing varnish compositions are composed likewise to the printing ink compositions except that printing varnish compositions do not contain pigment.

A plurality of printing techniques is known, such as offset printing, lithography printing, intaglio printing, flexographic printing, gravure printing and the like. The commercially available printing ink compositions and varnish compositions are tailored concerning their compositions so as to comply with the specific requirements of the printing technique(s) for which they are offered, such as an optimal viscosity for the printing technique(s), a good dissolution of the binder component, an excellent oxidation resistivity, a suitable boiling point and the like. On account of these reasons, the types of binders and solvents used in a printing ink composition and varnish composition depend on the printing technique, for which they are offered. For instance, sheet-fed offset printing ink/varnish compositions typically contain as solvent vegetable oils and/or fatty acid esters, whereas web offset printing ink/varnish compositions usually contain mineral oils or vegetable oils and gravure as well as flexographic printing ink/varnish compositions usually contain alcohols or esters as solvent.

However, any of the solvents usually included in printing ink/varnish compositions has drawbacks. Mineral oils and lower alcohols are flammable and irritating. Moreover, mineral oils are fossil resources. Other solvents, such as vegetable oils, are nutrition and therefore ethically critical as long as starvation exists. Moreover, most of the known solvents used in commercial printing ink/varnish compositions are not carbon dioxide neutrally producible.

US 5,993,911 describes aqueous coating compositions for multilayer varnishes, which contain as binder water-dilutable polyol compounds or cross-linkable compounds, such as (meth)acrylates and polyethers, as well as one or more poly(C₂-C₃-)alkyleneglycol-di(C₁-C₄-)alkylether.

EP 3 112 428 A1 relates to an inkjet, which contains pigment, binder and solvent, wherein the binder contains at least one acryl-based resin (A) as well as a copolymer (B) with a hydroxy(meth)acrylate unit as well as two other units, and wherein the solvent contains a polyalkylengylcole dialkylether and a cyclic ester.

Zhenova et al. describe in the American Chemical Society 2019, pages 14834 to 14840 short-chain oxymethylene dimethylether as solvent, such as the use of these compounds as solvent for polystyrene, as solvent in pharmaceutical syntheses and for the removal of inks and coatings.

In view thereof, the object underlying the present invention is to provide a printing ink composition or varnish composition, which comprises a solvent which is not harmful, non-toxic and particularly non-carcinogen, which has a comparably high flashpoint, which is easily disposable, which is not a nutrition and which is carbon dioxide neutrally producible, but which nevertheless is perfectly well suitable for printing ink/varnish compositions designed for offset printing.

In accordance with the present invention, this object is satisfied by providing an offset printing ink composition or offset varnish composition according to claim 1.

This solution bases on the surprising finding that oxymethylene ethers, which are currently evaluated as diesel substitute material, have the properties required for a solvent of a printing ink composition or varnish composition, such as a suitable viscosity, a good dissolution of those binder components typically included in printing ink/varnish compositions, an excellent oxidation resistivity, a suitable boiling point and the like. Moreover, oxymethylene ethers are non-toxic and particularly non-carcinogen, have a suitable volatility and flashpoint, if they are flammable at all. Furthermore, they are easily disposable, since they are usually classified in water hazard class 1. In addition, oxymethylene ethers are no nutrition and thus do not stand in competition of being used as human or pet food. Apart from that, oxymethylene ethers may be easily produced for instance from carbon dioxide, hydrogen and methanol and may be even produced from biomass, in particular from waste material in agriculture and forestry, which is no nutrition. Consequently, oxymethylene ethers produced in this way are no competition to the food production and may be produced with green electricity from renewable resources and carbon dioxide neutrally. Finally, oxymethylene ethers offer a suitable migration potential in typical food package substrates, such as paper, cardboard, films and metal foils, and are therefore particularly suitable for being used in printing ink/varnish compositions designed to be used for printing food packagings.

It has been found that in particular oxymethylene ethers having a small or medium length have the aforementioned characteristics in good balance. In accordance with a particularly preferred embodiment of the present invention, it is therefore proposed that the solvent component of the printing ink composition or varnish composition in accordance with the present invention comprises at least one oxymethylene ether according to the general formula (I):

CH₃[OCH₂]ₙOCH₃,

wherein n is an integer of 1 to 10, preferably 2 to 10 and more preferably 2 to 7.

The synthesis of oxymethylene ethers in general and in particular of those with the aforementioned general formula (I) is known. For instance, they may be synthesized via an aqueous synthesis route by an acidic catalyzed reaction of methanol and formaldehyde or via an anhydrous synthesis route by an acidic catalyzed reaction of trioxane and methylal. A method for synthesizing oxymethylene ethers according to the general formula (I) with n being 2 to 10 via the aforementioned anhydrous synthesis route is for example described in WO 2006/045506 A1. In particular, the oxymethylene ethers may be produced with a carbon dioxide neutrally process from waste material derived from renewable raw material, such as it is described by Nicolaus Dahmen et al. in "Erneuerbare Energie", herausgegeben von Thomas Bührke und Roland Wengenmayr im WILEY-VCH Verlag GmbH & Co. KGaA, Weinheim, 2007, ISBN: 978-3-527-40727-9, Seiten 59 bis 63. The synthesized oxymethylene ethers may then be purified by pervaporation and/or distillation.

In accordance with the present invention, the printing ink composition or varnish composition contains a solvent component, which includes at least one oxymethylene ether species. If not completely purified, oxymethylene ether usually contains two or more oxymethylene ether molecules with a different chain length. For instance, if oxymethylene ether according to the general formula (I) with n being 3 is synthesized, typically a mixture of several oxymethylene ethers will be obtained, wherein oxymethylene ether with n being 3 is the main component and oxymethylene ethers with n being 2, 4 and 5 are by-products. By purification for instance via distillation, the content of the target compound oxymethylene ether with n being 3 in the mixture may be increased up to more than 99% by weight. In accordance with the present invention an oxymethylene ether containing at least 95% by weight and preferably at least 95% by weight of a certain molecule length, such as of the general formula (I) with n being 3, is considered as pure oxymethylene ether, i.e. in this example as oxymethylene ether with n being 3, and not as mixture. However, if at least 5% by weight of oxymethylene ether molecules with a different molecule length are contained, the component is considered to be a mixture of at least two different oxymethylene ethers.

In particular when a mixture of two or more different oxymethylene ethers is used, it is preferred that the solvent component of the printing ink composition or varnish composition in accordance with the present invention comprises oxymethylene ether having a weight average molecular weight of 106 to 256 g/mol. In accordance with the present invention, the weight-average molecular weight of oxymethylene ethers is determined by mass spectroscopy or by gas chromatography-mass spectrometry (GC-MS).

In a further development of the idea of the present invention it is proposed that the printing ink composition or varnish composition comprises 5 to 90% by weight and preferably 30 to 85% by weight of solvent component based on the total weight of the printing ink composition or varnish composition. The solvent component is defined in the present invention to comprise any solvent contained in the printing ink composition or varnish composition, irrespective of whether the solvent is for dissolving the binder resin or other components. In the field of offset printing, solvent is sometimes considered as part of the binder. In accordance with the present invention, the binder component is the sum of all binder resins included in the printing ink composition or varnish composition, whereas the solvent component is the sum of all solvents included in the printing ink composition or varnish composition.

In order to largely achieve the effects of the present invention, it is preferred that the solvent component comprises at least 20% by weight, more preferably at least 50% by weight, even more preferably at least 70% by weight and most preferably at least 90% by weight of at least one oxymethylene ether.

In accordance with a particular preferred embodiment of the present invention, the solvent component of the printing ink composition or varnish composition consists of at least one oxymethylene ether, i.e. the solvent does not contain any other solvent except for the one or more oxymethylene ethers.

In accordance with an alternative, less preferred embodiment of the present invention, the solvent component of the printing ink composition or varnish composition comprises in addition to one or more oxymethylene ethers one or more other solvents. In this embodiment, the solvent component of the printing ink composition or varnish composition comprises preferably 20 to 95% by weight and more preferably 50 to 80% by weight of at least one oxymethylene ether and the remainder to 100% by weight of one or more solvents being selected from the group consisting of mineral oils, vegetable oils, fatty acid esters being different from vegetable oils, alcohols, esters, ethers, glycols, cyclic or linear hydrocarbons, ketones, lactones, alkanes, aromatic hydrocarbons, aromatic compounds and arbitrary combinations of two or more of the aforementioned solvents.

The present invention is not particularly limited concerning the chemical nature and the content of binder in the printing ink composition or varnish composition. Good results are in particular obtained, when the printing ink composition or varnish composition comprises 10 to 70% by weight and more preferably 10 to 45% by weight of binder component based on the total weight of the printing ink composition or varnish composition. Again, the binder component is according to the present invention the sum of all binder resins included in the printing ink composition or varnish composition, whereas any kind of solvent, even if it is contained for dissolving the binder resin, is not considered in the present invention as part of the binder component, but as part of the solvent component.

Suitable examples for the ingredient(s) of the binder component are binders being selected from the group consisting of polyesters, polyethers, polyurethanes, urethane-modified resins, polyamide resins, polyacrylates, maleic resins, rosin modified fumaric resins, collophonium resins, dimerized and polymerized rosins, rosin esters, tallic resins, tall oil based resins, ketonic resins, aldehyde resins, alkyd resins, collophonium modified phenolic resins, hydrocarbon-resin modified phenolic resins, hydrocarbon resins, modified hydrocarbon resins, maleic modified resins, silicates, silicones, phenolic resins, urea urethane resins, melamine resins, epoxy resins, polyterpene resins, shellac, copal, dammar, lignin derivatives, natural resins, poly-vinylalcohols, polyvinylethers, polyvinylacetates, vinylacetate copolymers, polyvinylchlorides, polyvinylpropionates, polyvinylbutyrates, polymethacrylates, polystyrenes, styrene-modified resins, styreneacrylate resins, polyolefines, coumarone-indene resins, aromatic formaldehyde resins, carbamide acid resins, sulfonamide resins, chlorinated resins, nitrocellulose, ethylcellulose, CAB (cellulose acetate butyrate), CAP (cellulose acetate propionate), cellulose compounds, acrylate resins, amino acrylic resins, aminopolyester resins, asphalt, CalMg resinates, rubbers, polysaccharides, polyol/iscocyanate compounds, temperature curing resins and arbitrary combinations of two or more of the aforementioned binders.

Furthermore, the printing ink composition or varnish composition may contain one or more additives. Examples for such additives are those selected from the group consisting of rheological additives, adhesives, defoamers, slip additives, gloss additives, waxes, wetting agents, levelling agents, curing agents, chelating agents, inhibitors, desiccants, stabilizers, emulsifiers, abrasions resistance additives, plasticizers, antistatic additives, light protection agents, matting agents, fillers and arbitrary combinations of two or more of the aforementioned additives.

The total amount of additives is preferably more than 0 to 15% by weight based on the total amount of the printing ink composition or varnish composition.

If the composition of the present invention is a printing ink composition, it includes one or more pigments. Preferably, the printing ink composition comprises 1 to 50% by weight and preferably 3 to 35% by weight of one or more pigments.

The printing ink composition or varnish composition is formulated so as to be suitable for any known offset printing.

In accordance with a further particular preferred embodiment of the present invention, the solvent component of the printing ink composition or varnish composition of the present invention comprises one or more oxymethylene ethers each having the general formula (I), wherein n is an integer of 5 to 7. In other words, in this embodiment the solvent component comprises one oxymethylene ether having the general formula (I) with n being an integer of 5, 6 or 7 or a mixture of two or more oxymethylene ethers each of which having the general formula (I) with n being an integer of 5 to 7, such as a mixture of oxymethylene ether with n being 5 and oxymethylene ether with n being 6 or a mixture of oxymethylene ether with n being 6 and oxymethylene ether with n being 7 or a mixture of oxymethylene ether with n being 5, oxymethylene ether with n being 6 and oxymethylene ether with n being 7.

For instance, in this embodiment the solvent component of the printing ink composition or varnish composition of the present invention comprises at least 60% by weight and more preferably at least 80% by weight of at least one oxymethylene ether and remainder to 100% by weight of one or more solvents being different from oxymethylene ether, wherein the at least one oxymethylene ether comprises at least 60% by weight, preferably at least 80% by weight, more preferably at least 90% by weight and most preferably consists of one or more oxymethylene ethers each having the general formula (I), wherein n is an integer of 5 to 7. Thus, in this variant of the embodiment, the solvent component may include up to 40% by weight or up to 20% by weight or 0% by weight of one or more solvents being different from oxymethylene ether. In turn, the oxymethylene ether part of the solvent component includes up to 40% by weight or up to 20% by weight or up to 10% by weight or 0% by weight of one or more oxymethylene ethers being different from oxymethylene ether having the general formula (I), wherein n is an integer of 5 to 7.

However, it is more preferred that the solvent component of this embodiment consists of at least one oxymethylene ether, wherein it comprises at least 80% by weight or more preferably at least 90% by weight of one or more oxymethylene ethers each having the general formula (I), wherein n is an integer of 5 to 7. Thus, in this variant of the embodiment, the solvent component only comprises as solvent one or more oxymethylene ethers, wherein at least 80% by weight or at least 90% by weight of the one or more oxymethylene ethers have the general formula (I), wherein n is an integer of 5 to 7. The remainder to 100% by weight of the solvent component may be one or more oxymethylene ethers having the general formula (I), wherein n is an integer of 2 to 4 or of at least 8.

Even more preferably, the solvent component of this embodiment consists of one or more oxymethylene ethers, wherein all of the one or more oxymethylene ethers have the general formula (I), wherein n is an integer of 5 to 7. Thus, in this variant of the embodiment, the solvent component only comprises as solvent one or more oxymethylene ethers, wherein none of the oxymethylene ethers has in general formula (I) an n being different from 5 to 7.

Preferably, the boiling point of the solvent component is in this embodiment more than 242°C. If pigment is contained, the content thereof is preferably at most 28% by weight based on the total weight of the printing ink composition or varnish composition.

In particular in the case that the printing ink composition or varnish composition is designed for being used in sheet-fed offset printing or web offset printing it is preferred that the binder component of the printing ink composition or varnish composition according to this embodiment comprises binder being selected from the group consisting of rosin resins, rosin modified phenolic resins, hydrocarbon-resin modified phenol resins, hydrocarbon resins, alkyd resins, maleic modified resins, polyesters, rosins, rosin esters, dimerized and polymerized rosins, rosin modified fumaric resins, phenolic resins, terpenes, polyamides, acrylics, modified hydrocarbon resins, styrenes, styrene modified resins, urethane modified resins, urethanes, tall oil based resins, tallic resins and arbitrary combinations of two or more of the aforementioned binders. Also preferred are those resins, which are those identified in The Printing Ink Manual. If a part of the solvent component comprises solvents being different from oxymethylene ether, it is preferably selected for a sheet-fed offset printing ink/varnish from vegetable oils and fatty acid esters and for a web offset printing ink/varnish from mineral oils, vegetable oils and fatty acid esters. The preferred total solvent content is 30 to 60% for a sheet-fed offset printing ink/varnish and 30 to 70% for a web offset printing ink/varnish.

Alternatively, the solvent component of the printing ink composition or varnish composition of the present invention comprises one or more oxymethylene ethers each having a weight average molecular weight of 196 to 256 g/mol. All numeric value ranges and specifics about binders and printing techniques mentioned above for the embodiment for oxymethylene ethers each having the general formula (I), wherein n is an integer of 5 to 7, are also preferred for this embodiment characterized by a weight average molecular weight of 196 to 256 g/mol.

In accordance with an alternative particular preferred embodiment of the present invention, the solvent component of the printing ink composition or varnish composition of the present invention comprises one or more oxymethylene ethers each having the general formula (I), wherein n is an integer of 3 to 5. In other words, in this embodiment the solvent component comprises one oxymethylene ether having the general formula (I) with n being an integer of 3, 4 or 5 or a mixture of two or more oxymethylene ether each of which having the general formula (I) with n being an integer of 3 to 5, such as a mixture of oxymethylene ether with n being 3 and oxymethylene ether with n being 4 or a mixture of oxymethylene ether with n being 3 and oxymethylene ether with n being 5 or a mixture of oxymethylene ether with n being 3, oxymethylene ether with n being 4 and oxymethylene ether with n being 5.

In accordance with an alternative particular preferred embodiment of the present invention, the solvent component of the printing ink composition or varnish composition of the present invention comprises one or more oxymethylene ethers each having the general formula (I), wherein n is an integer of 2 to 4. In other words, in this embodiment the solvent component comprises one oxymethylene ether having the general formula (I) with n being an integer of 2, 3 or 4 or a mixture of two or more oxymethylene ether each of which having the general formula (I) with n being an integer of 2 to 4, such as a mixture of oxymethylene ether with n being 2 and oxymethylene ether with n being 3 or a mixture of oxymethylene ether with n being 2 and oxymethylene ether with n being 4 or a mixture of oxymethylene ether with n being 2, oxymethylene ether with n being 3 and oxymethylene ether with n being 4.

For instance, in this embodiment the solvent component of the printing ink composition or varnish composition of the present invention comprises at least 25% by weight and more preferably at least 50% by weight of at least one oxymethylene ether and remainder to 100% by weight of one or more solvents being different from oxymethylene ether, wherein the at least one oxymethylene ether comprises at least 60% by weight, preferably at least 80% by weight, more preferably at least 90% by weight and most preferably consists of one or more oxymethylene ethers each having the general formula (I), wherein n is an integer of 2 to 4. Thus, in this variant of the embodiment, the solvent component may include up to 75% by weight or up to 50% by weight or 0% by weight of one or more solvents being different from oxymethylene ether. In turn, the oxymethylene ether part of the solvent component includes up to 40% by weight or up to 20% by weight or up to 10% by weight or 0% by weight of one or more solvents being different from oxymethylene ether having the general formula (I), wherein n is an integer of 2 to 4.

However, it is more preferred that the solvent component of this embodiment consists of at least one oxymethylene ether, wherein it comprises at least 80% by weight or more preferably at least 90% by weight of one or more oxymethylene ethers each having the general formula (I), wherein n is an integer of 2 to 4. Thus, in this variant of the embodiment, the solvent component only comprises as solvent one or more oxymethylene ethers, wherein at least 80% by weight or at least 90% by weight of the one or more oxymethylene ethers have the general formula (I), wherein n is an integer of 2 to 4. The remainder to 100% by weight of the solvent component may be one or more oxymethylene ethers having the general formula (I), wherein n is an integer of at least 5.

Even more preferably, the solvent component of this embodiment consists of one or more oxymethylene ethers, wherein all of the one or more oxymethylene ethers have the general formula (I), wherein n is an integer of 2 to 4. Thus, in this variant of the embodiment, the solvent component only comprises as solvent one or more oxymethylene ethers, wherein none of the oxymethylene ethers has in general formula (I) an n being different from 2 to 4.

Preferably, the boiling point of the solvent component is in this embodiment between 122 and 201°C. If pigment is contained, the content thereof is preferably at most 35% by weight based on the total weight of the printing ink composition or varnish composition.

Preferably, the printing ink composition or varnish composition according to this embodiment comprises 10 to 25% by weight of the binder component and 60 to 88% by weight of the solvent component.

Alternatively, the solvent component of the printing ink composition or varnish composition of the present invention comprises one or more oxymethylene ethers each having a weight average molecular weight of 106 to 166 g/mol. All numeric value ranges and specifics about binders and printing techniques mentioned above for the embodiment for oxymethylene ethers each having the general formula (I), wherein n is an integer of 2 to 4, are also preferred for this embodiment characterized by a weight average molecular weight of 106 to 166 g/mol.

In accordance with an alternative particular preferred embodiment of the present invention, the solvent component of the printing ink composition or varnish composition of the present invention comprises one or more oxymethylene ethers each having the general formula (I), wherein n is an integer of 2 to 3. In other words, in this embodiment the solvent component comprises one oxymethylene ether having the general formula (I) with n being an integer of 2 or 3 or a mixture of oxymethylene ether with n being 2 and oxymethylene ether with n being 3.

For instance, in this embodiment the solvent component of the printing ink composition or varnish composition of the present invention comprises at least 60% by weight and more preferably at least 80% by weight of at least one oxymethylene ether and remainder to 100% by weight of one or more solvents being different from oxymethylene ether, wherein the at least one oxymethylene ether comprises at least 60% by weight, preferably at least 80% by weight, more preferably at least 90% by weight and most preferably consists of one or more oxymethylene ethers each having the general formula (I), wherein n is an integer of 2 to 3. Thus, in this variant of the embodiment, the solvent component may include up to 40% by weight or up to 20% by weight or 0% by weight of one or more solvents being different from oxymethylene ether. In turn, the oxymethylene ether part of the solvent component includes up to 40% by weight or up to 20% by weight or up to 10% by weight or 0% by weight of one or more oxymethylene ethers being different from oxymethylene ether having the general formula (I), wherein n is an integer of 2 to 3.

However, it is more preferred that the solvent component of this embodiment consists of at least one oxymethylene ether, wherein it comprises at least 80% by weight or more preferably at least 90% by weight of one or more oxymethylene ethers each having the general formula (I), wherein n is an integer of 2 to 3. Thus, in this variant of the embodiment, the solvent component only comprises as solvent one or more oxymethylene ethers, wherein at least 80% by weight or at least 90% by weight of the one or more oxymethylene ethers have the general formula (I), wherein n is an integer of 2 to 3. The remainder to 100% by weight of the solvent component may be one or more oxymethylene ethers having the general formula (I), wherein n is an integer of at least 4.

Even more preferably, the solvent component of this embodiment consists of one or more oxymethylene ethers, wherein all of the one or more oxymethylene ethers have the general formula (I), wherein n is an integer of 2 to 3. Thus, in this variant of the embodiment, the solvent component only comprises as solvent one or more oxymethylene ethers, wherein none of the oxymethylene ethers has in general formula (I) an n being different from 2 to 3.

Preferably, the boiling point of the solvent component is in this embodiment between 122 and 201°C. If pigment is contained, the content thereof is preferably at most 50% by weight based on the total weight of the printing ink composition or varnish composition.

Alternatively, the solvent component of the printing ink composition or varnish composition of the present invention comprises one or more oxymethylene ethers each having a weight average molecular weight of 106 to 136 g/mol. All numeric value ranges and specifics about binders and printing techniques mentioned above for the embodiment for oxymethylene ethers each having the general formula (I), wherein n is an integer of 2 to 3, are also preferred for this embodiment characterized by a weight average molecular weight of 106 to 136 g/mol.

In accordance with another aspect, the present invention relates to the use of an afore-described printing ink composition or varnish composition in an offset printing.

## Claims

1. An offset printing ink composition or offset varnish composition containing a binder component and a solvent component, wherein the solvent component comprises at least one oxymethylene ether according to the general formula (I):
CH₃[OCH₂]ₙOCH₃,
wherein n is an integer of 1 to 10.

2. The printing ink composition or varnish composition according to claim 1, wherein the solvent component comprises oxymethylene ether according to the general formula (I) having a weight average molecular weight of 106 to 256 g/mol.

3. The printing ink composition or varnish composition according to claim 1 or 2, which comprises 5 to 90% by weight and preferably 30 to 85% by weight of solvent component based on the total weight of the printing ink composition or varnish composition at print viscosity, wherein preferably the solvent component comprises at least 20% by weight, preferably at least 50% by weight, more preferably at least 70% by weight and most preferably at least 90% by weight of at least one oxymethylene ether according to the general formula (I).

4. The printing ink composition or varnish composition according to any of the preceding claims wherein the solvent component consists of at least one oxymethylene ether according to the general formula (I).

5. The printing ink composition or varnish composition according to any of claims 1 to 3, wherein the solvent component comprises 20 to 95% by weight and preferably 50 to 80% by weight of at least one oxymethylene ether according to the general formula (I) and the remainder to 100% by weight of one or more solvents being selected from the group consisting of mineral oils, vegetable oils, fatty acid esters being different from vegetable oils, alcohols, esters, ethers, glycols, cyclic or linear hydrocarbons, ketones, lactones, alkanes, aromatic hydrocarbons, aromatic compounds and arbitrary combinations of two or more of the aforementioned solvents.

6. The printing ink composition or varnish composition according to any of the preceding claims, which comprises 10 to 70% by weight and preferably 10 to 45% by weight of binder component based on the total weight of the printing ink composition or varnish composition at print viscosity, wherein preferably the binder component comprises binder being selected from the group consisting of polyesters, polyethers, polyurethanes, urethane-modified resins, polyamide resins, polyacrylates, maleic resins, rosin modified fumaric resins, collophonium resins, dimerized and polymerized rosins, rosin esters, tallic resins, tall oil based resins, ketonic resins, aldehyde resins, alkyd resins, collophonium modified phenolic resins, hydrocarbon-resin modified phenolic resins, hydrocarbon resins, modified hydrocarbon resins, maleic modified resins, silicates, silicones, phenolic resins, urea urethane resins, melamine resins, epoxy resins, polyterpene resins, shellac, copal, dammar, lignin derivatives, natural resins, poly-vinylalcohols, polyvinylethers, polyvinylacetates, vinylacetate copolymers, polyvinylchlorides, polyvinylpropionates, polyvinylbutyrates, polymethacrylates, polystyrenes, styrene-modified resins, styreneacrylate resins, polyolefines, coumarone-indene resins, aromatic formaldehyde resins, carbamide acid resins, sulfonamide resins, chlorinated resins, nitrocellulose, ethylcellulose, CAB (cellulose acetate butyrate), CAP (cellulose acetate propionate), cellulose compounds, acrylate resins, amino acrylic resins, aminopolyester resins, asphalt, CalMg resinates, rubbers, polysaccharides, polyol/iscocyanate compounds, temperature curing resins and arbitrary combinations of two or more of the aforementioned binders.

7. The printing ink composition according to any of the preceding claims, which comprises 1 to 50% by weight and preferably 3 to 35% by weight of one or more pigments.

8. The printing ink composition or varnish composition according to any of the preceding claims, which comprises a solvent component comprising at least 60% by weight of at least one oxymethylene ether according to the general formula (I) and remainder to 100% by weight of one or more solvents being different from oxymethylene ether, wherein the at least one oxymethylene ether according to the general formula (I) comprises at least 60% by weight, preferably at least 80% by weight, more preferably at least 90% by weight and most preferably consists of one or more oxymethylene ethers each having the general formula (I), wherein n is an integer of 5 to 7.

9. The printing ink composition or varnish composition according to claim 8, wherein the solvent component consists of at least one oxymethylene ether, which comprises at least 80% by weight, more preferably at least 90% by weight and most preferably 100% by weight of one or more oxymethylene ethers each having the general formula (I), wherein n is an integer of 5 to 7.

10. The printing ink composition or varnish composition according to claim 8 or 9, wherein the binder component comprises binder being selected from the group consisting of rosin resins, rosin modified phenolic resins, hydrocarbon-resin modified phenol resins, hydrocarbon resins, alkyd resins, maleic modified resins, polyesters, rosins, rosin esters, dimerized and polymerized rosins, rosin modified fumaric resins, phenolic resins, terpenes, polyamides, acrylics, modified hydrocarbon resins, styrenes, styrene modified resins, urethane modified resins, urethanes, tall oil based resins, tallic resins and arbitrary combinations of two or more of the aforementioned binders, wherein the printing ink composition or varnish composition preferably comprises 10 to 40% by weight of the binder component and 30 to 70% by weight of the solvent component or comprises 20 to 40% by weight of the binder component and 30 to 60% by weight of the solvent component.

11. The printing ink composition or varnish composition according to any of claims 1 to 7, which comprises a solvent component comprising at least 60% by weight of at least one oxymethylene ether according to the general formula (I) and remainder to 100% by weight of one or more solvents being different from oxymethylene ether, wherein the at least one oxymethylene ether according to the general formula (I) comprises at least 60% by weight, preferably at least 80% by weight, more preferably at least 90% by weight and most preferably consists of one or more oxymethylene ethers each having the general formula (I), wherein n is an integer of 2 to 4.

12. The printing ink composition or varnish composition according to claim 11, wherein the binder component comprises binder being selected from the group consisting of nitrocelluloses, polyurethanes, polyurea polyurethanes, ketonic resins, maleic resins, polyamides, polyvinyl butyrates, polyvinyl chlorides, CAB, CAP, polyesters, shellac, polyvinylether, polyol/isocyanate compounds, ethylcellulose, acrylic resins, styrene acrylate resins, polyvinyl alcohols, vinyl acetate copolymers and arbitrary combinations of two or more of the aforementioned binders, wherein the printing ink composition or varnish composition preferably comprises 10 to 25% by weight of the binder component and 60 to 88% by weight of the solvent component.

13. The printing ink composition or varnish composition according to any of claims 1 to 7, which comprises a solvent component comprising at least 60% by weight of at least one oxymethylene ether according to the general formula (I) and remainder to 100% by weight of one or more solvents being different from oxymethylene ether, wherein the at least one oxymethylene ether according to the general formula (I) comprises at least 60% by weight, preferably at least 80% by weight, more preferably at least 90% by weight and most preferably consists of one or more oxymethylene ethers each having the general formula (I), wherein n is an integer of 2 to 3, wherein preferably the binder component comprises binder being selected from the group consisting of rosin resins, rosin modified phenolic resins, hydrocarbon-resin modified phenol resins, hydrocarbon resins, alkyd resins, maleic modified resins, polyesters, rosins, rosin esters, dimerized and polymerized rosins, rosin modified fumaric resins, phenolic resins, terpenes, polyamides, acrylics, modified hydrocarbon resins, styrenes, styrene modified resins, urethane modified resins, urethanes, tall oil based resins, tallic resins and arbitrary combinations of two or more of the aforementioned binders.

14. Use of an offset printing ink composition or offset varnish composition according to any of the preceding claims in an offset printing method.

## Patentansprüche

1. Offsetdruckfarben-Zusammensetzung oder Offsetlack-Zusammensetzung, die eine Bindemittelkomponente und eine Lösungsmittelkomponente enthält, wobei die Lösungsmittelkomponente mindestens einen Oxymethylenether gemäß der folgenden allgemeinen Formel (I) umfasst:
CH₃[OCH₂]ₙOCH₃,
wobei n eine ganze Zahl von 1 bis 10 ist.

2. Druckfarbenzusammensetzung oder Lackzusammensetzung nach Anspruch 1, wobei die Lösungsmittelkomponente Oxymethylenether gemäß der allgemeinen Formel (I) umfasst, der ein gewichtsmittleres Molekulargewicht von 106 bis 256 g/mol aufweist.

3. Druckfarbenzusammensetzung oder Lackzusammensetzung nach Anspruch 1 oder 2, die 5 bis 90 Gewichtsprozent und bevorzugt 30 bis 85 Gewichtsprozent Lösungsmittelkomponente, bezogen auf das Gesamtgewicht der Druckfarbenzusammensetzung oder Lackzusammensetzung bei Druckviskosität, umfasst, wobei vorzugsweise die Lösungsmittelkomponente mindestens 20 Gewichtsprozent, vorzugsweise mindestens 50 Gewichtsprozent, bevorzugter mindestens 70 Gewichtsprozent und am meisten bevorzugt mindestens 90 Gewichtsprozent mindestens eines Oxymethylenethers gemäß der allgemeinen Formel (I) umfasst.

4. Druckfarbenzusammensetzung oder Lackzusammensetzung nach einem der vorherigen Ansprüche, wobei die Lösungsmittelkomponente aus mindestens einem Oxymethylenether gemäß der allgemeinen Formel (I) besteht.

5. Druckfarbenzusammensetzung oder Lackzusammensetzung nach einem der Ansprüche 1 bis 3, wobei die Lösungsmittelkomponente 20 bis 95 Gewichtsprozent und vorzugsweise 50 bis 80 Gewichtsprozent mindestens eines Oxymethylenethers gemäß der allgemeinen Formel (I) umfasst und der Rest 100 Gewichtsprozent eines oder mehrerer Lösungsmittel ausgewählt ist aus der Gruppe, bestehend aus Mineralölen, pflanzlichen Ölen, Fettsäureestern, die verschieden sind von pflanzlichen Ölen, Alkoholen, Estern, Ethern, Glykolen, cyclischen oder linearen Kohlenwasserstoffen, Ketonen, Lactonen, Alkanen, aromatischen Kohlenwasserstoffen, aromatischen Verbindungen und beliebigen Kombinationen von zwei oder mehreren der vorgenannten Lösungsmittel.

6. Druckfarbenzusammensetzung oder Lackzusammensetzung nach einem der vorherigen Ansprüche, die 10 bis 70 Gewichtsprozent und vorzugsweise 10 bis 45 Gewichtsprozent Bindemittelkomponente, bezogen auf das Gesamtgewicht der Druckfarbenzusammensetzung oder Lackzusammensetzung bei Druckviskosität, umfasst, wobei die Bindemittelkomponente vorzugsweise Bindemittel umfasst, die ausgewählt sind aus der Gruppe, bestehend aus Polyestern, Polyethern, Polyurethanen, urethanmodifizierten Harzen, Polyamidharzen, Polyacrylaten, Maleinharzen, harzmodifizierten Fumarharzen, Kollophoniumharzen, dimerisierten und polymerisierten Kolophoniumharzen, Kolophoniumestern, Tallharzen, Harzen auf Tallölbasis, Ketonharzen, Aldehydharzen, Alkydharzen, kollophoniummodifizierten Phenolharzen, Harzen, kohlenwasserstoffharzmodifizierten Phenolharzen, Kohlenwasserstoffharzen, modifizierten Kohlenwasserstoffharzen, maleinmodifizierten Harzen, Silikaten, Silikonen, Phenolharzen, Harnstoffurethanharzen, Melaminharzen, Epoxidharzen, Polyterpenharzen, Schellack, Copal, Dammar, Ligninderivate, natürlichen Harzen, Polyvinylalkoholen, Polyvinylethern, Polyvinylacetaten, Vinylacetatcopolymeren, Polyvinylchloriden, Polyvinylpropionaten, Polyvinylbutyraten, Polymethacrylaten, Polystyrolen, styrolmodifizierten Harzen, Styrolacrylatharzen, Polyolefinen, Cumaron-Indenharzen, aromatischen Formaldehydharzen, Carbamidsäureharzen, Sulfonamidharzen, chlorierten Harzen, Nitrocellulose, Ethylcellulose, CAB (Celluloseacetatbutyrat), CAP (Celluloseacetatpropionat), Celluloseverbindungen, Acrylat Harze, Aminoacrylharzen, Aminopolyesterharzen, Asphalt, Ca/Mg-Resinaten, Kautschuken, Polysacchariden, Polyol/Isocyanat-Verbindungen, temperaturhärtenden Harzen und beliebigen Kombinationen aus zwei oder mehreren der vorgenannten Bindemittel.

7. Druckfarbenzusammensetzung nach einem der vorherigen Ansprüche, die 1 bis 50 Gewichtsprozent und vorzugsweise 3 bis 35 Gewichtsprozent eines oder mehrerer Pigmente umfasst.

8. Druckfarbenzusammensetzung oder Lackzusammensetzung nach einem der vorherigen Ansprüche, die eine Lösungsmittelkomponente umfasst, die mindestens 60 Gewichtsprozent mindestens eines Oxymethylenethers gemäß der allgemeinen Formel (I) umfasst und zu 100 Gewichtsprozent aus einem oder mehreren Lösungsmitteln besteht, die von Oxymethylenether verschieden sind, wobei der mindestens eine Oxymethylenether gemäß der allgemeinen Formel (I) mindestens 60 Gewichtsprozent, vorzugsweise mindestens 80 Gewichtsprozent, bevorzugter mindestens 90 Gewichtsprozent umfasst und am meisten bevorzugt aus einem oder mehreren Oxymethylenethern besteht, die jeweils die allgemeine Formel (I) aufweisen, wobei n eine ganze Zahl von 5 bis 7 ist.

9. Druckfarbenzusammensetzung oder Lackzusammensetzung nach Anspruch 8, wobei die Lösungsmittelkomponente aus mindestens einem Oxymethylenether besteht, der zu mindestens 80 Gewichtsprozent, bevorzugter zu mindestens 90 Gewichtsprozent und am meisten bevorzugt zu 100 Gewichtsprozent aus einem oder mehreren Oxymethylenethern mit jeweils der allgemeinen Formel (I) besteht, wobei n eine ganze Zahl von 5 bis 7 ist.

10. Druckfarbenzusammensetzung oder Lackzusammensetzung nach Anspruch 8 oder 9, wobei die Bindemittelkomponente Bindemittel umfasst, die ausgewählt sind aus der Gruppe, bestehend aus Kolophoniumharzen, harzmodifizierten Phenolharzen, kohlenwasserstoffharzmodifizierten Phenolharzen, Kohlenwasserstoffharzen, Alkydharzen, maleinmodifizierten Harzen, Polyestern, Kolophoniumharzen, Kolophoniumestern, dimerisierten und polymerisierten Kolophoniumharzen, harzmodifizierten Fumarharzen, Phenolharzen, Terpenen, Polyamiden, Acrylharzen, modifizierten Kohlenwasserstoffharzen, Styrolen, styrolmodifizierten Harzen, urethanmodifizierten Harzen, Urethanen, Harzen auf Tallölbasis, Tallharzen und beliebigen Kombinationen von zwei oder mehreren der vorgenannten Bindemittel, wobei die Druckfarbenzusammensetzung oder Lackzusammensetzung vorzugsweise 10 bis 40 Gewichtsprozent der Bindemittelkomponente und 30 bis 70 Gewichtsprozent der Lösungsmittelkomponente umfasst oder 20 bis 40 Gewichtsprozent der Bindemittelkomponente und 30 bis 60 Gewichtsprozent der Lösungsmittelkomponente umfasst.

11. Druckfarbenzusammensetzung oder Lackzusammensetzung nach einem der Ansprüche 1 bis 7, die eine Lösungsmittelkomponente umfasst, die mindestens 60 Gewichtsprozent mindestens eines Oxymethylenethers gemäß der allgemeinen Formel (I) umfasst und zu 100 Gewichtsprozent aus einem oder mehreren Lösungsmitteln besteht, die von Oxymethylenether verschieden sind, wobei der mindestens eine Oxymethylenether gemäß der allgemeinen Formel (I) mindestens 60 Gewichtsprozent, vorzugsweise mindestens 80 Gewichtsprozent, bevorzugter mindestens 90 Gewichtsprozent umfasst und am meisten bevorzugt aus einem oder mehreren Oxymethylenethern besteht, die jeweils die allgemeine Formel (I) aufweisen, wobei n eine ganze Zahl von 2 bis 4 ist.

12. Druckfarbenzusammensetzung oder Lackzusammensetzung nach Anspruch 11, wobei die Bindemittelkomponente Bindemittel umfasst, das ausgewählt ist aus der Gruppe, bestehend aus Nitrocellulosen, Polyurethanen, Polyharnstoffpolyurethanen, Ketonharzen, Maleinharzen, Polyamiden, Polyvinylbutyraten, Polyvinylchloriden, CAB, CAP, Polyestern, Schellack, Polyvinylether, Polyol/Isocyanat-Verbindungen, Ethylcellulose, Acrylharzen, Styrol-Acrylatharzen, Polyvinylalkoholen, VinylacetatCopolymeren und beliebigen Kombinationen von zwei oder mehreren der vorgenannten Bindemittel, wobei die Druckfarbenzusammensetzung oder Lackzusammensetzung vorzugsweise 10 bis 25 Gewichtsprozent der Bindemittelkomponente und 60 bis 88 Gewichtsprozent der Lösungsmittelkomponente umfasst.

13. Druckfarbenzusammensetzung oder Lackzusammensetzung nach einem der Ansprüche 1 bis 7, die eine Lösungsmittelkomponente umfasst, die mindestens 60 Gewichtsprozent mindestens eines Oxymethylenethers gemäß der allgemeinen Formel (I) umfasst und zu 100 Gewichtsprozent aus einem oder mehreren Lösungsmitteln besteht, die von Oxymethylenether verschieden sind, wobei der mindestens eine Oxymethylenether gemäß der allgemeinen Formel (I) mindestens 60 Gewichtsprozent, vorzugsweise mindestens 80 Gewichtsprozent, bevorzugter mindestens 90 Gewichtsprozent umfasst und am meisten bevorzugt aus einem oder mehreren Oxymethylenethern besteht, die jeweils die allgemeine Formel (I) aufweisen, wobei n eine ganze Zahl von 2 bis 3 ist, wobei vorzugsweise die Bindemittelkomponente Bindemittel umfasst, die ausgewählt sind aus der Gruppe, bestehend aus Kolophoniumharzen, harzmodifizierten Phenolharzen, kohlenwasserstoffharzmodifizierten Phenolharzen, Kohlenwasserstoffharzen, Alkydharzen, maleinmodifizierten Harzen, Polyestern, Kolophoniumharzen, Kolophoniumestern, dimerisierten und polymerisierten Kolophoniumharzen, harzmodifizierten Fumarharzen, Phenolharzen, Terpenen, Polyamiden, Acrylharzen, modifizierten Kohlenwasserstoffharzen, Styrolen, styrolmodifizierten Harzen, urethanmodifizierten Harzen, Urethanen, Harzen auf Tallölbasis, Tallharzen und beliebigen Kombinationen von zwei oder mehreren der vorgenannten Bindemittel.

14. Verwendung einer Offsetdruckfarben-Zusammensetzung oder Offsetlack-Zusammensetzung nach einem der vorherigen Ansprüche in einem Offsetdruckverfahren.

## Revendications

1. Composition d'encre d'impression offset ou composition de vernis offset contenant un composant liant et un composant solvant, dans laquelle le composant solvant comprend au moins un éther d'oxyméthylène selon la formule générale (I) :
CH₃[OCH₂]ₙOCH₃,
dans laquelle n est un nombre entier de 1 à 10.

2. Composition d'encre d'impression ou composition de vernis selon la revendication 1, dans laquelle le composant solvant comprend de l'éther d'oxyméthylène selon la formule générale (I) ayant un poids moléculaire moyen en poids de 106 à 256 g/mol.

3. Composition d'encre d'impression ou composition de vernis selon la revendication 1 ou 2, qui comprend 5 à 90 % en poids et de préférence 30 à 85 % en poids de composant solvant sur la base du poids total de la composition d'encre d'impression ou de la composition de vernis à la viscosité d'impression, dans laquelle de préférence le composant solvant comprend au moins 20 % en poids, de préférence au moins 50 % en poids, de manière davantage préférée au moins 70 % en poids et de manière préférée entre toutes au moins 90 % en poids d'au moins un éther d'oxyméthylène selon la formule générale (I).

4. Composition d'encre d'impression ou composition de vernis selon l'une quelconque des revendications précédentes, dans laquelle le composant solvant consiste en au moins un éther d'oxyméthylène selon la formule générale (I).

5. Composition d'encre d'impression ou composition de vernis selon l'une quelconque des revendications 1 à 3, dans laquelle le composant solvant comprend 20 à 95 % en poids et de préférence 50 à 80 % en poids d'au moins un éther d'oxyméthylène selon la formule générale (I) et le reste jusqu'à 100 % en poids d'un ou plusieurs solvants étant choisis dans le groupe constitué par les huiles minérales, huiles végétales, esters d'acides gras différents des huiles végétales, alcools, esters, éthers, glycols, hydrocarbures cycliques ou linéaires, cétones, lactones, alcanes, hydrocarbures aromatiques, composés aromatiques et des combinaisons arbitraires de deux ou plusieurs des solvants susmentionnés.

6. Composition d'encre d'impression ou composition de vernis selon l'une quelconque des revendications précédentes, qui comprend 10 à 70 % en poids et de préférence 10 à 45 % en poids de composant liant sur la base du poids total de la composition d'encre d'impression ou de la composition de vernis à la viscosité d'impression, dans laquelle de préférence le composant liant comprend un liant étant choisi dans le groupe constitué par les polyesters, polyéthers, polyuréthanes, résines modifiées par uréthane, résines de polyamide, polyacrylates, résines maléiques, résines fumariques modifiées par colophane, résines de collophonium, colophanes dimérisées et polymérisées, esters de colophane, résines de tall, résines à base de tall oil, résines cétoniques, résines aldéhydiques, résines alkydes, résines phénoliques modifiées par collophonium, résines phénoliques modifiées par résine d'hydrocarbure, résines d'hydrocarbures, résines d'hydrocarbures modifiées, résines modifiées maléiques, silicates, silicones, résines phénoliques, résines d'urée-uréthane, résines de mélamine, résines époxy, résines polyterpéniques, shellac, copal, dammar, dérivés de lignine, résines naturelles, polyvinylalcools, polyvinyléthers, polyvinylacétates, copolymères d'acétate de vinyle, polychlorures de vinyle, polyvinylpropionates, polyvinylbutyrates, polyméthacrylates, polystyrènes, résines modifiées par styrène, résines de styrèneacrylate, polyoléfines, résines de coumarone-indène, résines de formaldéhyde aromatique, résines d'acide carbamide, résines de sulfonamide, résines chlorées, nitrocellulose, éthylcellulose, CAB (acétate butyrate de cellulose), CAP (acétate propionate de cellulose), composés cellulosiques, résines acrylates, résines amino acryliques, résines d'aminopolyester, asphalte, résinates de Ca/Mg, caoutchoucs, polysaccharides, composés de polyol/isocyanate, résines de durcissement à température et des combinaisons arbitraires de deux ou plusieurs des liants susmentionnés.

7. Composition d'encre d'impression selon l'une quelconque des revendications précédentes, qui comprend 1 à 50 % en poids et de préférence 3 à 35 % en poids d'un ou plusieurs pigments.

8. Composition d'encre d'impression ou composition de vernis selon l'une quelconque des revendications précédentes, qui comprend un composant solvant comprenant au moins 60 % en poids d'au moins un éther d'oxyméthylène selon la formule générale (I) et le reste jusqu'à 100 % en poids d'un ou plusieurs solvants étant différents de l'éther d'oxyméthylène, dans laquelle l'au moins un éther d'oxyméthylène selon la formule générale (I) comprend au moins 60 % en poids, de préférence au moins 80 % en poids, de manière davantage préférée au moins 90 % en poids et de manière préférée entre toutes consiste en un ou plusieurs éthers d'oxyméthylène ayant chacun la formule générale (I), dans laquelle n est un nombre entier de 5 à 7.

9. Composition d'encre d'impression ou composition de vernis selon la revendication 8, dans laquelle le composant solvant consiste en au moins un éther d'oxyméthylène, qui comprend au moins 80 % en poids, de préférence au moins 90 % en poids et de manière préférée entre toutes 100 % en poids d'un ou plusieurs éthers d'oxyméthylène ayant chacun la formule générale (I), dans laquelle n est un nombre entier de 5 à 7.

10. Composition d'encre d'impression ou composition de vernis selon la revendication 8 ou 9, dans laquelle le composant liant comprend un liant étant choisi dans le groupe constitué par les résines de colophane, résines phénoliques modifiées par colophane, résines phénoliques modifiées par résine d'hydrocarbure, résines d'hydrocarbures, résines alkydes, résines modifiées maléiques, polyesters, colophanes, esters de colophane, colophanes dimérisées et polymérisées, résines fumariques modifiées par colophane, résines phénoliques, terpènes, polyamides, acryliques, résines d'hydrocarbures modifiées, styrènes, résines modifiées par styrène, résines modifiées par uréthane, uréthanes, résines à base de tall oil, les résines de tall, et des combinaisons arbitraires de deux ou plus des liants susmentionnés, dans laquelle la composition d'encre d'impression ou la composition de vernis comprend de préférence 10 à 40 % en poids du composant liant et 30 à 70 % en poids du composant solvant ou comprend 20 à 40 % en poids du composant liant et 30 à 60 % en poids du composant solvant.

11. Composition d'encre d'impression ou composition de vernis selon l'une quelconque des revendications 1 à 7, qui comprend un composant solvant comprenant au moins 60 % en poids d'au moins un éther d'oxyméthylène selon la formule générale (I) et le reste jusqu'à 100 % en poids d'un ou plusieurs solvants étant différents de l'éther d'oxyméthylène, dans laquelle l'au moins un éther d'oxyméthylène selon la formule générale (I) comprend au moins 60 % en poids, de préférence au moins 80 % en poids, de manière davantage préférée au moins 90 % en poids et de manière préférée entre toutes consiste en un ou plusieurs éthers d'oxyméthylène ayant chacun la formule générale (I), dans laquelle n est un nombre entier de 2 à 4.

12. Composition d'encre d'impression ou composition de vernis selon la revendication 11, dans laquelle le composant liant comprend un liant étant choisi dans le groupe constitué par les nitrocelluloses, polyuréthanes, polyuréthanes de polyurée, résines cétoniques, résines maléiques, polyamides, butyrates de polyvinyle, chlorures de polyvinyle, CAB, CAP, polyesters, shellac, polyvinyléther, composés de polyol/isocyanate, éthylcellulose, résines acryliques, résines d'acrylate de styrène, alcools polyvinyliques, copolymères d'acétate de vinyle et des combinaisons arbitraires de deux ou plusieurs des liants susmentionnés, dans laquelle la composition d'encre d'impression ou composition de vernis comprend de préférence 10 à 25 % en poids du composant liant et 60 à 88 % en poids du composant solvant.

13. Composition d'encre d'impression ou composition de vernis selon l'une quelconque des revendications 1 à 7, qui comprend un composant solvant comprenant au moins 60 % en poids d'au moins un éther d'oxyméthylène selon la formule générale (I) et le reste jusqu'à 100 % en poids d'un ou plusieurs solvants étant différents de l'éther d'oxyméthylène, dans laquelle l'au moins un éther d'oxyméthylène selon la formule générale (I) comprend au moins 60 % en poids, de préférence au moins 80 % en poids, de manière davantage préférée au moins 90 % en poids et de manière préférée entre toutes consiste en un ou plusieurs éthers d'oxyméthylène ayant chacun la formule générale (I), dans laquelle n est un nombre entier de 2 à 3, dans laquelle de préférence le composant liant comprend un liant étant choisi dans le groupe constitué par les résines de colophane, résines phénoliques modifiées par colophane, résines phénoliques modifiées par résine d'hydrocarbure, résines d'hydrocarbures, résines alkydes, résines modifiées maléiques, polyesters, colophanes, esters de colophane, colophanes dimérisées et polymérisées, résines fumariques modifiées par colophane, résines phénoliques, terpènes, polyamides, acryliques, résines d'hydrocarbures modifiées, styrènes, résines modifiées par styrène, résines modifiées par uréthane, uréthanes, résines à base de tall oil, résines de tall et des combinaisons arbitraires de deux ou plusieurs des liants susmentionnés.

14. Utilisation d'une composition d'encre d'impression offset ou d'une composition de vernis offset selon l'une quelconque des revendications précédentes dans un procédé d'impression offset.
